# EUROPEAN PATENT APPLICATION

(11) **EP 4 729 811 A1**
(43) Date of publication of application: **22.04.2026**
(21) Application number: 25206264.1
(22) Date of filing: 02.10.2025
(51) Int. Cl.: F16J 15/3224

(54) **SEALING DEVICE**

(30) Priority: 15.10.2024 JP 2024180375
(71) Applicant: NOK Corporation, Minato-ku, Tokyo 105-8585 (JP)
(72) Inventor: SEKI, Masahiro, Kumamoto, 869-2231 (JP)
(74) Representative: TBK

(57) **Abstract**

A gasket capable of suppressing reduction in sealing performance due to an eccentricity of an application target is provided. A sealing device 1 includes an elastic body portion 2 formed from an elastic body. The elastic body portion 2 includes a fitting portion 10 that is an annular part, a lip 20 that is an annular part protruding from the fitting portion 10 to an inner periphery side, and an annular first protruding portion 30. The lip 20 protrudes from an inner end portion 10a of the fitting portion 10 while being inclined to an inner side. A length 1 of the lip 20 in the protruding direction is set based on a minimum crush allowance c when a tube is eccentric at maximum with respect to a through hole. The first protruding portion 30 protrudes from the inner end portion 10a of the fitting portion 10 toward the inner side.

## Description

### [Technical Field]

The present invention relates to a sealing device, and more particularly, to a sealing device to be used between eccentric members.

### [Background Art]

Hitherto, in order to seal a space, a sealing device that seals a gap between members has been used. Examples of such sealing devices include O-rings and D-rings that are annular sealing devices that tightly close a gap between a hole and a member inserted in the hole to seal an internal space communicating with the hole. For example, the O-ring or the like is attached between, in a fluid mechanism such as a cooling mechanism, a tube inserted in a through hole formed in a housing to guide a fluid into the housing and the through hole of the housing to tightly close the gap between the tube and the through hole. The O-ring or the like has, for example, dimensions and the like that are set so that tight closing can be achieved even when the member inserted to the hole is eccentric based on a tolerance between members (see, for example, Patent Literature 1).

### [Citation List]

### [Patent Literature]

[Patent Literature 1]
Japanese Patent Laid-Open No. 2005-331060

### [Summary of Invention]

### [Technical Problem]

However, in recent years, along with development of new devices and improvement of the conventional devices, the device structure is becoming more complicated, and the device in which the O-ring or the like has been used is also becoming more complicated. For example, in the fluid mechanism such as the cooling mechanism, the eccentricity of the tube with respect to the through hole may be increased as compared with the related art, and the conventional sealing device such as the O-ring may be reduced in sealing performance due to the eccentricity, and may thus be incapable of tightly closing the gap between the tube and the through hole. As described above, there has been a demand for the conventional sealing device to have a structure that is not reduced in sealing performance even at the time of larger eccentricity between members of an application target.

The present invention has been made in view of the above-mentioned problem, and has an object to provide a sealing device that makes it possible to suppress reduction in sealing performance due to an eccentricity of an application target.

### [Solution to Problem]

In order to achieve the above-mentioned object, a sealing device according to the present invention is a sealing device that tightly closes an annular gap between a hole formed in a first member and a second member inserted in the hole, the sealing device including an elastic body portion that is a part annular around an axis line and formed from an elastic body. The elastic body portion includes a fitting portion that is a part annular around the axis line, a lip that protrudes from the fitting portion to an inner periphery side and is annular around the axis line, and a first protruding portion annular around the axis line. The lip protrudes from an end portion of the fitting portion on one side in the axis line direction, while being inclined to the one side. A length of the lip in a protruding direction is set based on a minimum crush allowance when the second member is eccentric at maximum with respect to the hole. The first protruding portion protrudes from the end portion of the fitting portion toward the one side.

In the sealing device according to one aspect of the present invention, the length of the lip is set so that the minimum crush allowance is equal to or more than a predetermined minimum value.

In the sealing device according to one aspect of the present invention, the minimum value is based on an amount of eccentricity when the second member is eccentric at maximum.

In the sealing device according to one aspect of the present invention, the minimum value is 30% of the amount of eccentricity when the second member is eccentric at maximum.

In the sealing device according to one aspect of the present invention, the minimum value is a ratio of the amount of eccentricity when the second member is eccentric at maximum to a width of the annular gap in a radial direction.

In the sealing device according to one aspect of the present invention, the first protruding portion defines an annular recessed part recessed to another side in the axis line direction between the first protruding portion and the lip.

In the sealing device according to one aspect of the present invention, a width of the first protruding portion in a radial direction is equal to or less than a difference between a minimum value of a width of the annular gap in the radial direction when the second member is eccentric at maximum and a thickness of the lip.

In the sealing device according to one aspect of the present invention, the elastic body portion includes a second protruding portion that protrudes toward an outer periphery side and is annular around the axis line. The second protruding portion is provided so that an end of the second protruding portion on the outer periphery side is located in a range from an end of the first protruding portion on the one side to a predetermined position in the axis line direction. The predetermined position is a position separated from the end of the first protruding portion in the axis line direction by 1/3 of an elastic body portion height that is a width in the axis line direction in the fitting portion and the first protruding portion of the elastic body portion.

In the sealing device according to one aspect of the present invention, the elastic body portion includes a plurality of the second protruding portions, and the plurality of second protruding portions are arranged in the axis line direction.

In the sealing device according to one aspect of the present invention, the end of the second protruding portion is positioned on the outer periphery side of each of the fitting portion and the first protruding portion.

### [Advantageous Effect of Invention]

With the sealing device according to the present invention, it is possible to suppress reduction in sealing performance due to the eccentricity of the application target.

### [Brief Description of Drawings]

[Figure 1] Figure 1 is a sectional view illustrating a schematic configuration of a sealing device according to a first embodiment of the present invention.
[Figure 2] Figure 2 is a sectional perspective view illustrating the schematic configuration of the sealing device illustrated in Figure 1.
[Figure 3] Figure 3 is a partially-enlarged sectional view illustrating one side relative to an axis line of a cross section of the sealing device illustrated in Figure 1 in an enlarged manner.
[Figure 4] Figure 4 is a sectional perspective view illustrating a schematic configuration of a sealing device illustrating a modification example of a first protruding portion.
[Figure 5] Figure 5 is a sectional view illustrating the sealing device is a usage state of being attached to a fluid mechanism such as a cooling mechanism serving as an application target.
[Figure 6] Figure 6 is a sectional view illustrating a sealing device in the usage state and in the maximum eccentric state in which an axis line of a tube is shifted at maximum from the axis line of the sealing device.
[Figure 7] Figure 7 is a sectional perspective view illustrating a schematic configuration of a sealing device according to a second embodiment of the present invention.
[Figure 8] Figure 8 is a partially-enlarged sectional view illustrating one side of an axis line of a cross section of the sealing device illustrated in Figure 7 in an enlarged manner.
[Figure 9] Figure 9 is a sectional perspective view illustrating a schematic configuration of an example of a modification example of the sealing device illustrated in Figure 7.
[Figure 10] Figure 10 is a sectional perspective view illustrating a schematic configuration of an example of a modification example of the sealing device illustrated in Figure 7.
[Figure 11] Figure 11 is a sectional perspective view illustrating a schematic configuration of an example of a modification example of the sealing device illustrated in Figure 7.

### [Description of Embodiments]

Hereinafter, embodiments of the present invention will be described with reference to the drawings.

A sealing device according to the present invention is a sealing device for tightly closing an annular gap between a hole formed in a first member and a second member inserted in the hole. The sealing device according to the present invention is applied to, for example, a fluid mechanism such as a cooling mechanism. Specifically, for example, in the fluid mechanism, the sealing device is used between a hole formed in a housing serving as the first member and a tube serving as the second member. The hole is, for example, a through hole for introducing a fluid into the housing, and the tube forms, for example, a flow path of the fluid. The sealing device according to the present invention is attached between the tube serving as the second member inserted in the through hole and the through hole of the housing serving as the first member to tightly close a gap between the tube and the through hole. It is to be noted that the application target of the sealing device according to the present invention is not limited thereto. The sealing device according to the present invention can assume various devices, mechanisms, and the like as the application target. Hereinafter, as an example, sealing devices according to embodiments of the present invention are described assuming a fluid mechanism as the application target.

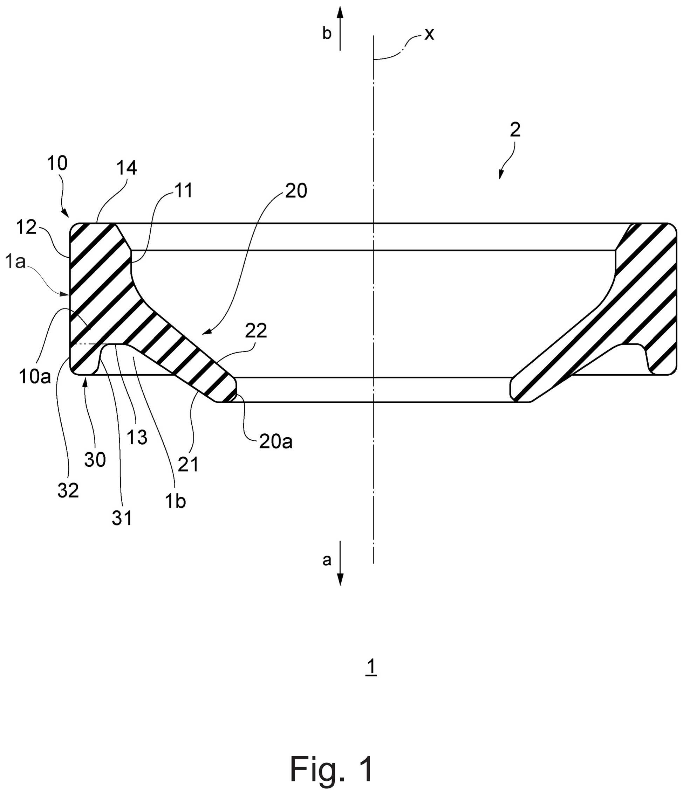

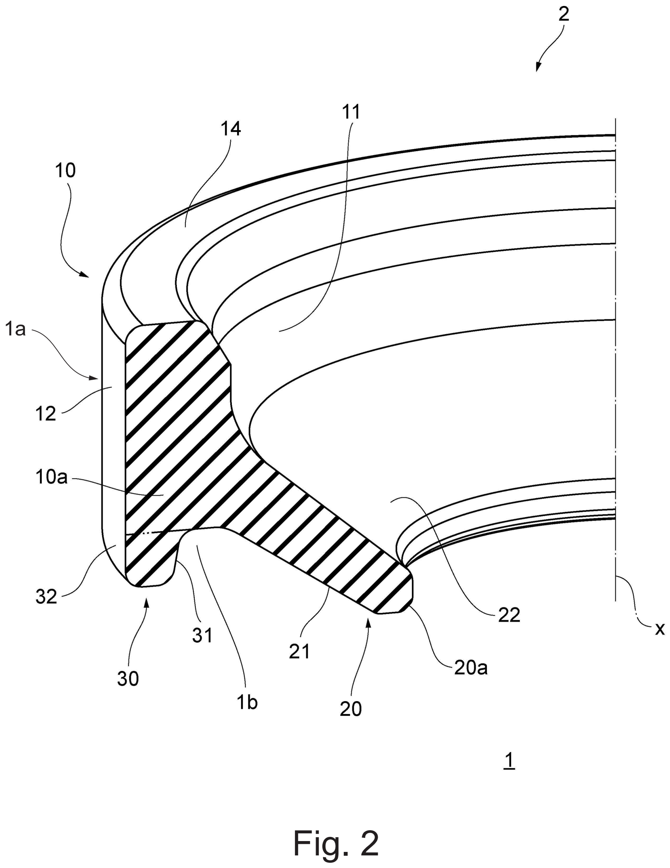

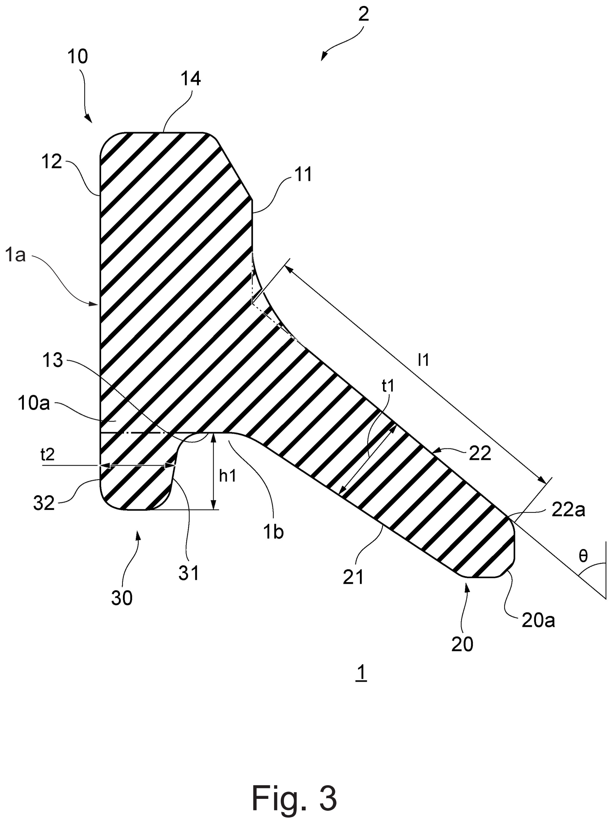

Figure 1 is a sectional view illustrating a schematic configuration of a sealing device 1 according to a first embodiment of the present invention, and Figure 2 is a sectional perspective view illustrating the schematic configuration of the sealing device 1. It is to be noted that Figure 2 illustrates a part of the sealing device 1, and illustrates one side relative to an axis line x of the cross section of the sealing device 1. Further, Figure 3 is a partially-enlarged sectional view illustrating one side relative to the axis line x of the cross section of the sealing device 1 illustrated in Figure 1 in an enlarged manner. It is to be noted that a cross section is a cross section taken along a plane including the axis line x. As illustrated in Figure 1, the sealing device 1 includes an elastic body portion 2 that is a part annular around the axis line x and formed from an elastic body. The elastic body portion 2 includes a fitting portion 10 that is a part annular around the axis line x, a lip 20 that is a part protruding from the fitting portion 10 to an inner periphery side and annular around the axis line x, and a first protruding portion 30 annular around the axis line x. The lip 20 protrudes while being inclined to the inner side from an inner end portion 10a that is an end portion on an inner side that is one side of the axis line x direction of the fitting portion 10. A length l of the lip 20 in the protruding direction is set based on a minimum crush allowance c when the tube is eccentric at maximum with respect to the through hole. The first protruding portion 30 protrudes from the inner end portion 10a of the fitting portion 10 toward the inner side. Hereinafter, the configuration of the sealing device 1 will be specifically described.

It is to be noted that, as described above, for the sake of convenience of description, the one side of the axis line x direction (arrow a direction of Figure 1) represents the inner side, and another side of the axis line x direction (arrow b direction of Figure 1) represents an outer side. The inner side is a side in a direction in which the tube is inserted in the axis line x direction, and the outer side is a side in a direction opposite to the direction in which the tube is inserted in the axis line x direction. Further, a direction orthogonal to the axis line x direction represents a radial direction, and a side approaching the axis line x in the radial direction represents an inner periphery side, and a side away from the axis line x in the radial direction represents an outer periphery side.

As illustrated in Figures 1 to 3, the sealing device 1 is configured from the elastic body portion 2. The elastic body portion 2 is an elastic body formed from an elastic material. Examples of the elastic material of the elastic body portion 2 include various rubber materials and elastomers. Examples of the various rubber materials include synthetic rubbers such as nitrile rubber (NBR), hydrogenated nitrile butadiene rubber (H-NBR), acrylic rubber (ACM), and fluororubber (FKM). It is to be noted that the elastic material of the elastic body portion 2 is not limited to those. Further, the elastic body portion 2 is an integrally formed member, and the fitting portion 10, the lip 20, and the first protruding portion 30 are portions of the integrally formed elastic body portion 2, and are connected to each other.

The fitting portion 10 is, as described above, a part annular around the axis line x, and is a part to be fitted to the through hole of the housing in a usage state of the sealing device 1 to be described later. The fitting portion 10 includes, as illustrated in Figures 1 to 3, an inner peripheral surface 11 and an outer peripheral surface 12 that are annular surfaces facing away from each other in the radial direction. The inner peripheral surface 11 is a surface facing the inner periphery side, and is, for example, a tubular surface extending along the axis line x. The inner peripheral surface 11 is, for example, a tubular surface, a cylindrical surface, or a substantially cylindrical surface having the axis line x as a center axis or a substantially center axis. Further, the outer peripheral surface 12 is a surface facing the outer periphery side, and is, for example, a tubular surface extending along the axis line x. The outer peripheral surface 12 is, for example, a tubular surface, a cylindrical surface, or a substantially cylindrical surface having the axis line x as a center axis or a substantially center axis, or a conical cylindrical surface or a substantially conical cylindrical surface. As an example, the outer peripheral surface 12 is, as illustrated in Figure 3, a conical cylindrical surface or a substantially conical cylindrical surface having a diameter that further decreases as progress from the outer side toward the inner side in the axis line x direction, and is a surface that is tapered inward.

As illustrated in Figures 1 to 3, the fitting portion 10 includes an inner end 13 that is an end on the inner side. A part of the inner end 13 on the inner periphery side is exposed, and a part thereof on the outer periphery side forms a boundary with the first protruding portion 30. The inner end 13 is positioned between an end of the inner peripheral surface 11 on the inner side and an end of the outer peripheral surface 12 on the inner side. As illustrated in Figures 1 to 3, in the fitting portion 10, the inner end 13 and a part in the vicinity thereof are the inner end portion 10a.

As illustrated in Figures 1 to 3, the fitting portion 10 includes an outer end 14 facing away from the inner end 13 in the axis line x direction. The outer end 14 is an annular surface facing the outer side, and extends between an end of the inner peripheral surface 11 on the outer side and an end of the outer peripheral surface 12 on the outer side. The outer end 14 extends along a plane orthogonal to the axis line x, and extends, for example, on a plane orthogonal or substantially orthogonal to the axis line x.

The lip 20 is, as described above, a part protruding from the inner end portion 10a of the fitting portion 10 while being inclined to the inner side, and is a seal lip that contacts the tube in the usage state to be described later. As illustrated in Figures 1 to 3, the lip 20 protrudes to the inner periphery side from the inner peripheral surface 11 at the inner end portion 10a of the fitting portion 10, and annularly extends around the axis line x.

The lip 20 includes, as illustrated in Figures 1 to 3, an inner surface 21 and an outer surface 22 that are annular surfaces facing away from each other in the axis line x direction. The inner surface 21 is, for example, a tubular surface having a diameter that further decreases as progress from the outer side toward the inner side in the axis line x direction, and is specifically, for example, a conical cylindrical surface or a substantially conical cylindrical surface having the axis line x as a center axis or a substantially center axis. The outer surface 22 is, for example, a tubular surface having a diameter that further decreases as progress from the outer side toward the inner side in the axis line x direction, and is specifically, for example, a conical cylindrical surface or a substantially conical cylindrical surface having the axis line x as a center axis or a substantially center axis. As illustrated in Figures 1 and 3, in section, the lip 20 is, for example, thinned toward a distal end 20a, and the outer surface 22 is inclined more to the inner side than the inner surface 21. It is to be noted that the lip 20 is not required to be thinned toward the distal end 20a, and, for example, the inner surface 21 and the outer surface 22 may be parallel, or, in section, the lip 20 may become thicker toward the distal end 20a. It is to be noted that the distal end 20a is an end of the lip 20 on the inner periphery side. As illustrated in Figure 3, the distal end 20a is, for example, a curved surface, and is smoothly connected to each of the inner surface 21 and the outer surface 22. It is to be noted that the distal end 20a is not required to be a curved surface, and is not required to be smoothly connected to each of the inner surface 21 and the outer surface 22.

Further, as illustrated in Figures 1 and 3, for example, the lip 20 protrudes from a part on the inner end 13 side of the inner end portion 10a of the fitting portion 10. Specifically, the inner surface 21 of the lip 20 is connected to the inner end 13 of the fitting portion 10, and the outer surface 22 of the lip 20 is connected to the inner peripheral surface 11 of the fitting portion 10. As illustrated in Figures 1 and 3, for example, the inner surface 21 is smoothly connected to the inner end 13 of the fitting portion 10, and, for example, the outer surface 22 is smoothly connected to the inner peripheral surface 11 of the fitting portion 10.

A length l1 of the lip 20 in the protruding direction is, for example, as illustrated in Figure 3, a length in section of the outer surface 22. As illustrated in Figure 3, when the outer surface 22 is smoothly connected to the distal end 20a and the inner peripheral surface 11 of the fitting portion 10, each end of the outer surface 22 is assumed as, for example, an end of the outer surface 22 when the outer surface 22 is not smoothly connected to the distal end 20a and the inner peripheral surface 11 of the fitting portion 10, and a distance between both ends of the outer surface 22 is regarded as the length l1 of the lip 20. It is to be noted that the length l1 of the lip 20 may be a length defined by other methods. For example, the length l1 of the lip 20 may be a length in section of the inner surface 21, or the length l1 of the lip 20 may be a length of a center line between the inner surface 21 and the outer surface 22 in section. As described above, the length l1 of the lip 20 is set based on the minimum crush allowance c when the tube is eccentric at maximum with respect to the through hole. The set length l1 of the lip 20 is described later. It is to be noted that the crush allowance c is a crush amount in the radial direction of the lip 20 crushed by the tube in the usage state.

Further, as described above, the lip 20 is inclined to the inner side, and an inclination angle θ of the lip 20 is set to, for example, a predetermined angle. The inclination angle θof the lip 20 is, for example, as illustrated in Figure 3, an angle in the protruding direction of the lip 20 with respect to the axis line x in section, and is specifically, for example, an angle of the outer surface 22 of the lip 20 with respect to the axis line x in section. It is to be noted that the inclination angle θ of the lip 20 may be an angle defined by other methods. For example, the inclination angle θ of the lip 20 may be an angle of the inner surface 21 with respect to the axis line x in section, or the inclination angle θof the lip 20 may be an angle of the center line between the inner surface 21 and the outer surface 22 with respect to the axis line x in section. The set inclination angle θ of the lip 20 is described later.

Further, as described later, for example, a thickness t1 of the lip 20 is set to a predetermined thickness. The thickness t1 of the lip 20 is, as illustrated in Figure 3, a distance between the inner surface 21 and the outer surface 22, and is, for example, a distance between the inner surface 21 and the outer surface 22 in a direction orthogonal to the outer surface 22 at a predetermined position in section. The predetermined position in section is, for example, a middle position in the direction of the length l1 of the lip 20. It is to be noted that the thickness t1 of the lip 20 may be a value defined by other methods. For example, the thickness t1 of the lip 20 may be a distance between the inner surface 21 and the outer surface 22 in a direction orthogonal to the inner surface 21 at a predetermined position in section, or the thickness t1 of the lip 20 may be a distance between the inner surface 21 and the outer surface 22 in a direction orthogonal to the center line between the inner surface 21 and the outer surface 22 at a predetermined position in section. Further, the thickness t1 of the lip 20 may be the maximum value, the minimum value, an average value, or the like of a plurality of values.

As described above, the elastic body portion 2 includes the first protruding portion 30, and the first protruding portion 30 protrudes from the inner end portion 10a of the fitting portion 10 toward the inner side. As illustrated in Figures 1 to 3, the first protruding portion 30 protrudes on the outer periphery side of the lip 20 from the inner end 13 of the fitting portion 10 to the inner side. That is, in the elastic body portion 2, the protruding portion 30 is connected to the fitting portion 10 via the inner end 13 serving as a boundary.

As illustrated in Figures 2 and 3, the first protruding portion 30 includes an inner peripheral surface 31 and an outer peripheral surface 32 that are annular surfaces opposed to each other in the radial direction. The inner peripheral surface 31 is a surface facing the inner periphery side, and is, for example, a tubular surface extending along the axis line x. The inner peripheral surface 11 is, for example, a tubular surface, a cylindrical surface, or a substantially cylindrical surface having the axis line x as a center axis or a substantially center axis, or a conical cylindrical surface or a substantially conical cylindrical surface. The inner peripheral surface 31 is specifically, for example, as illustrated in Figure 3, a conical cylindrical surface or a substantially conical cylindrical surface having a diameter that further increases as progress from the outer side toward the inner side in the axis line x direction, and is a surface that is tapered outward. Further, the outer peripheral surface 32 is a surface facing the outer periphery side, and is, for example, a tubular surface extending along the axis line x. The outer peripheral surface 32 is, for example, a tubular surface, a cylindrical surface, or a substantially cylindrical surface having the axis line x as a center axis or a substantially center axis, or a conical cylindrical surface or a substantially conical cylindrical surface. As an example, as illustrated in Figure 3, the outer peripheral surface 32 is flush or substantially flush with the outer peripheral surface 12 of the fitting portion 10, is a conical cylindrical surface or a substantially conical cylindrical surface having a diameter that further decreases as progress from the outer side toward the inner side in the axis line x direction, and is a surface that is tapered inward in the axis line x direction. As described above, as an example, the first protruding portion 30 is thinner toward a distal end 30a in section. It is to be noted that the distal end 30a is an end of the first protruding portion 30 on the inner side. As illustrated in Figure 3, the distal end 30a is, for example, an annular surface along a plane orthogonal to the axis line x, and is smoothly connected to each of the inner peripheral surface 31 and the outer peripheral surface 32. It is to be noted that the distal end 30a is not required to be smoothly connected to each of the inner peripheral surface 31 and the outer peripheral surface 32.

Further, as illustrated in Figure 3, the first protruding portion 30 protrudes from a part on the outer periphery side of the inner end 13 of the inner end portion 10a of the fitting portion 10. Specifically, the inner peripheral surface 31 of the first protruding portion 30 is connected to the inner end 13 of the fitting portion 10 on the inner periphery side, and the outer peripheral surface 32 of the first protruding portion 30 is connected to the outer peripheral surface 12 of the fitting portion 10. Accordingly, the outer peripheral surface 12 of the fitting portion 10 and the outer peripheral surface 32 of the first protruding portion 30 form an outer peripheral surface 1a that is a surface facing the outer periphery side of the sealing device 1. As illustrated in Figure 3, for example, the inner peripheral surface 31 is smoothly connected to the inner end 13 of the fitting portion 10, and, for example, the outer peripheral surface 32 is smoothly connected to the outer peripheral surface 12 of the fitting portion 10. As illustrated in Figures 1 to 3, the first protruding portion 30 defines an annular recessed part 1b recessed to the outer side between the first protruding portion 30 and the lip 20.

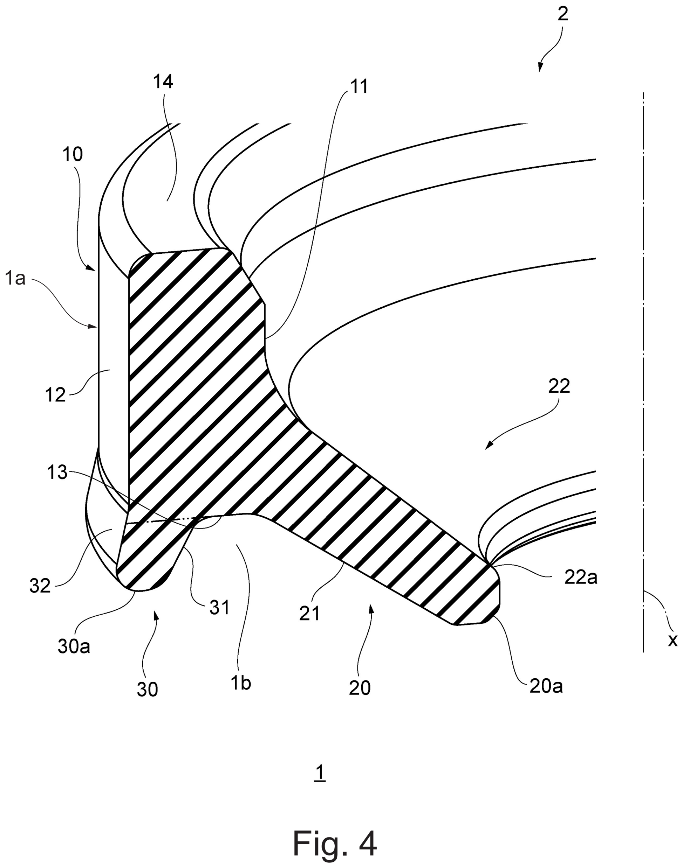

It is to be noted that the outer peripheral surface 32 of the first protruding portion 30 is not required to be flush with the outer peripheral surface 12 of the fitting portion 10. Figure 4 is a sectional perspective view illustrating a schematic configuration of the sealing device 1 illustrating a modification example of the first protruding portion 30. As illustrated in Figure 4, the outer peripheral surface 32 of the first protruding portion 30 may be further inclined to the outer periphery side as progress toward the inner side with respect to the outer peripheral surface 12 of the fitting portion 10. Specifically, for example, the outer peripheral surface 32 may be a tubular surface, or a conical cylindrical surface or a substantially conical cylindrical surface having the axis line x as a center axis or a substantially center axis and a diameter that further increases as progress toward the inner side in the axis line x direction. Further, the outer peripheral surface 32 may be a cylindrical surface or a substantially cylindrical surface having the axis line x as a center axis or a substantially center axis. Further, the outer peripheral surface 32 may be, as long as the outer peripheral surface 32 is further inclined to the outer periphery side as progress toward the inner side with respect to the outer peripheral surface 12 of the fitting portion 10, a tubular surface, or a conical cylindrical surface or a substantially conical cylindrical surface having the axis line x as a center axis or a substantially center axis and a diameter that further decreases as progress toward the inner side in the axis line x direction.

As described later, for example, a height h1 of the first protruding portion 30 is set to a predetermined height. The height h1 of the first protruding portion 30 is a height of the first protruding portion 30 in the protruding direction, and is, for example, as illustrated in Figure 3, a height of the first protruding portion 30 in the axis line x direction. Specifically, the height h1 of the first protruding portion 30 is a distance between the inner end 13 of the fitting portion 10 and the distal end 30a of the first protruding portion 30 in the axis line x direction. It is to be noted that the height h1 of the first protruding portion 30 may be a height defined by other methods.

Further, as described later, for example, a thickness t2 of the first protruding portion 30 is set to a predetermined thickness. The thickness t2 of the first protruding portion 30 is, as illustrated in Figure 3, a width of the first protruding portion 30 in the radial direction, is a distance in the radial direction between the inner peripheral surface 31 and the outer peripheral surface 32, and is, for example, a distance in the radial direction between the inner peripheral surface 31 and outer peripheral surface 32 at a predetermined position in section. This predetermined position in section is, for example, a middle position in the direction of the height h1 of the first protruding portion 30. It is to be noted that the thickness t2 of the first protruding portion 30 may be a value defined by other methods. Further, the thickness t2 of the first protruding portion 30 may be the maximum value, the minimum value, an average value, or the like of a plurality of values.

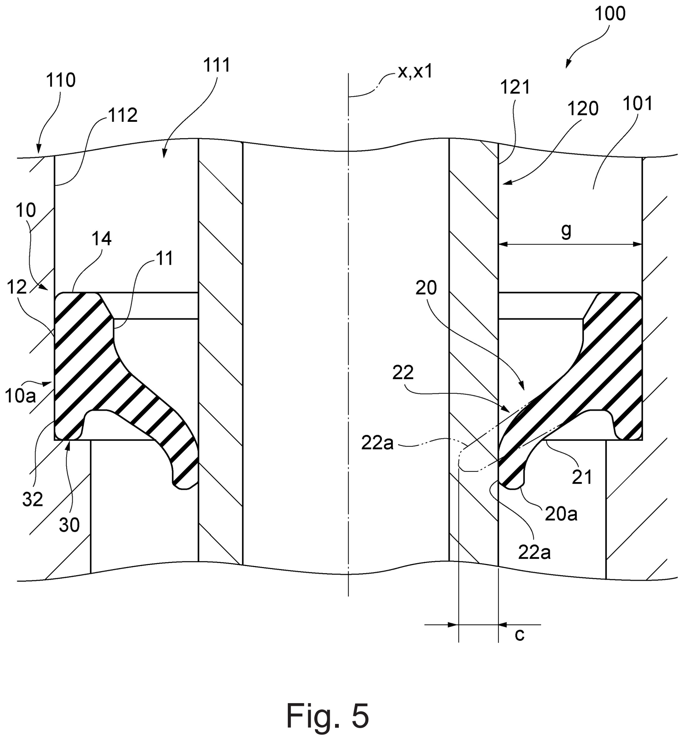

The sealing device 1 has the above-mentioned configuration. Next, the action of the sealing device 1 will be described. Figure 5 is a sectional view illustrating the sealing device 1 in the usage state of being attached to a fluid mechanism 100 such as a cooling mechanism serving as an application target. As illustrated in Figure 5, the sealing device 1 is brought to the usage state by being attached to an annular gap 101 between a housing 110 of the fluid mechanism 100 and a tube 120. Specifically, the sealing device 1 is press-fitted into a through hole 111 of the housing 110 from the outer side so that the sealing device 1 is fixed to the through hole 111. Then, the tube 120 is inserted to the sealing device 1 fixed to the through hole 111 from the outer side, that is, from the outer end 14 side of the fitting portion 10, and the outer surface 22 of the lip 20 contacts an outer peripheral surface 121 of the tube 12 to bring the sealing device 1 to the usage state. In the usage state, the outer peripheral surface 12 of the fitting portion 10 of the sealing device 1 is pressed against an inner peripheral surface 112 of the through hole 111. Further, in the usage state, the outer peripheral surface 32 of the first protruding portion 30 of the sealing device 1 is pressed against the inner peripheral surface 112 of the through hole 111. Further, in the usage state, the outer surface 22 of the lip 20 contacts the outer peripheral surface 121 of the tube 120 with the crush allowance c having a predetermined width. It is to be noted that, in the usage state illustrated in Figure 5, the tube 120 is located at a desired position (hereinafter also referred to as an initial position) in the radial direction, and an axis line x1 of the tube 120 matches or substantially matches the axis line x of the sealing device 1. Accordingly, when the tube 120 is at the initial position, the crush allowance c of the lip 20 is constant or substantially constant across the entire circumference of the lip 20. It is to be noted that the crush allowance c of the lip 20 is specifically, for example, a displacement amount in the radial direction of a distal end 22a of the outer surface 22 of the deformed lip 20 from a position of the distal end 22a of the outer surface 22 of the non-deformed lip 20. It is to be noted that the distal end 22a of the outer surface 22 of the lip 20 is an end of the outer surface 22 on the distal end 20a side.

As described above, in the usage state, the fitting portion 10 contacts the inner peripheral surface 112 of the through hole 111 of the housing 110, and the lip 20 contacts the outer peripheral surface 121 of the tube 120. Thus, the annular gap 101 between the inner peripheral surface 112 of the through hole 111 and the outer peripheral surface 121 of the tube 120 is tightly closed, and an internal space of the housing 110 communicating with the through hole 111 is sealed. This seals a sealing target such as a fluid inside of the housing 110 and the tube 120. Further, the sealing device 1 tightly closes the gap 101 even when the tube 120 is eccentric from the initial position.

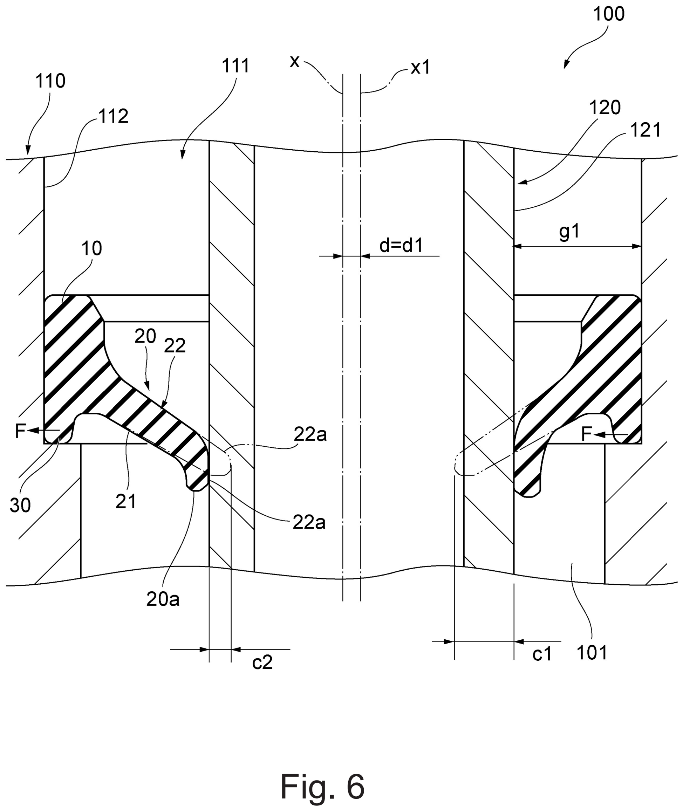

Figure 6 is a sectional view illustrating the sealing device 1 in the usage state and in the maximum eccentric state in which the axis line x1 of the tube 120 is shifted at maximum from the axis line x. In the maximum eccentric state, an amount of eccentricity d of the tube 120 is a maximum amount of eccentricity d1 that is maximum. It is to be noted that the amount of eccentricity is a shift amount of the axis line x1 from the axis line x in the axis line x direction. For example, due to accumulation of the maximum values of the tolerances of the portions of the fluid mechanism 100 and the tolerances of the sealing device 1, the tube 120 is brought to the maximum eccentric state. For example, when a plurality of through holes 111 are provided in the housing 110, and the plurality of tubes 120 to be respectively inserted to the plurality of through holes 111 are integrated, the amount of eccentricity of the tube 120 tends to increase.

The above-mentioned length l1 of the lip 20 is set based on a relative position between the tube 120 in the maximum eccentric state and the through hole 111.

As illustrated in Figure 6, when the tube 120 is in the maximum eccentric state, the crush allowance c of a part of the lip 20 positioned in a direction in which the tube 120 is moved (eccentric) at maximum in the radial direction becomes a maximum crush allowance c1 that is maximum, and the crush allowance c of a part on the opposite side in the radial direction to the part of the lip 20 having the maximum crush allowance c1 becomes a minimum crush allowance c2 that is minimum.

The length l1 of the lip 20 is set so that, for example, when the tube 120 is in the maximum eccentric state, the minimum crush allowance c2 in the crush allowance c of the entire circumference of the lip 20 becomes a predetermined minimum value or more. This predetermined minimum value of the minimum crush allowance c2 is based on, for example, the amount of eccentricity d of the tube 120 in the maximum eccentric state. Specifically, for example, this predetermined minimum value of the minimum crush allowance c2 is set to 30% of the maximum amount of eccentricity d1 that is the amount of eccentricity d of the tube 120 in the maximum eccentric state. That is, for example, the length l1 of the lip 20 is set so that the minimum crush allowance c2 of the lip 20 is equal to or more than 30% (d1×0.3) of the maximum amount of eccentricity d1 (c2≥d1×0.3). This makes it possible to keep the required crush allowance and keep the required sealing performance by causing the lip 20 to follow the eccentric tube 120 even in a part of the lip 20 in which the crush allowance c becomes the minimum crush allowance c2 when the tube 120 is in the maximum eccentric state.

Further, the length l1 of the lip 20 is set to, for example, a ratio (d1/g) of the maximum amount of eccentricity d1 to a width g in the radial direction of the annular gap 101 between the through hole 111 and the tube 120. It is to be noted that this width g in the radial direction of the gap 101 is a width in a state in which the tube 120 is not eccentric (see Figure 5). This makes it possible to keep the required sealing performance by causing the lip 20 to follow the eccentric tube 120 even in a part of the lip 20 in which the crush allowance c becomes the minimum crush allowance c2 when the tube 120 is in the maximum eccentric state.

Further, the thickness t1 of the lip 20 to the length l1 of the lip 20 is set based on, for example, a pressure of a sealing target sealed by the sealing device 1. That is, the thickness t1 of the lip 20 to the length l1 of the lip 20 (t1/l1) is set so that the lip 20 has a rigidity capable of keeping the required sealing performance even when receiving the pressure of the sealing target. Specifically, for example, the thickness t1 of the lip 20 to the length l1 of the lip 20 (t1/l1) is set so that the minimum crush allowance c2 of the lip 20 has a value set as described above even when the lip 20 receives the pressure of the sealing target when the tube 120 is in the maximum eccentric state.

Further, the inclination angle θ of the lip 20 is set to, for example, an angle in a predetermined range. For example, the inclination angle θ is set to an angle that prevents the lip 20 from being damaged by interference to the lip 20 when the tube 120 is inserted to the sealing device 1. Further, the inclination angle θ is set to an angle that prevents the sealing device 1 from being detached from the through hole 111 when the tube 120 is inserted. Further, the inclination angle θ is set to an angle that prevents the lip 20 and the first protruding portion 30 from interfering with each other in the usage state. The inclination angle θ is, for example, an angle in a range of 30° or more and 50° or less. When the inclination angle θ is large, the possibility that the lip 20 is damaged due to the insertion of the tube 120 is increased. Further, when the inclination angle θ is large, the possibility that the sealing device 1 is detached from the through hole 111 when the tube 120 is inserted is increased. Meanwhile, when the inclination angle θ is small, in the usage state, the lip 20 and the first protruding portion 30 may interfere with each other to cause damage of the sealing device 1.

Further, in the fitting portion 10, dimensions of each portion are set so that the fitting portion 10 contacts the through hole 111 to keep the sealing performance even when the tube 120 is eccentric. For example, a press fitting allowance of the fitting portion 10 with respect to the through hole 111 is 0.05 mm or substantially 0.05 mm. That is, the radius of the outer peripheral surface 12 of the fitting portion 10 is larger than the radius of the inner peripheral surface 112 of the through hole 111 by 0.05 mm or substantially 0.05 mm. Further, for example, the thickness of the fitting portion 10 is 1.6 times or substantially 1.6 times the maximum amount of eccentricity d1 of the tube 120. It is to be noted that the thickness of the fitting portion 10 is a distance in the radial direction between the inner peripheral surface 11 and the outer peripheral surface 12.

Further, as illustrated in Figure 6, when the tube 120 is eccentric, a reaction force (reaction force F) in a direction opposed to the eccentric direction is generated in the first protruding portion 30. This generates, in the first protruding portion 30, a force resistant to separation of the outer peripheral surface 12 of the fitting portion 10 from the inner peripheral surface 112 of the through hole 111 by being pulled by the lip 20 due to the eccentricity of the tube 120. Thus, when the tube 120 is eccentric, formation of a gap between the fitting portion 10 and the through hole 111 is suppressed. This suppresses reduction in sealing performance of the sealing device 1.

For example, the height h1 and the thickness t2 of the first protruding portion 30 are set so that the first protruding portion 30 has a rigidity that includes the reaction force F against the eccentricity, which is effective to suppress reduction in sealing performance of the sealing device 1 as described above.

Further, the thickness t2 of the first protruding portion 30 is set to be equal to or less than a difference (g1-t1) between a minimum width g1 and the thickness t1 of the lip 20. The minimum width g1 is the width g at minimum, which is the width g in the radial direction of the annular gap 101 between the through hole 111 and the tube 120 in the maximum eccentric state of the tube 120. This suppresses or prevents contact of the lip 20 to the first protruding portion 30 even in the maximum eccentric state of the tube 120. This suppresses or prevents damage of the lip 20 and the first protruding portion 30.

As described above, the sealing device 1 according to the first embodiment of the present invention can suppress reduction in sealing performance due to eccentricity of the tube 120 that is the application target.

Further, the sealing device 1 can reduce the reaction force generated by the sealing device 1 at the time of attachment to the through hole 111 of the housing 110, and can facilitate the attachment of the sealing device 1 to the housing 110. Accordingly, an operator who attaches the sealing device 1 to the housing 110 can attach the sealing device 1 to the through hole 111 with the force of the operator's finger, and the workload on the operator can be reduced.

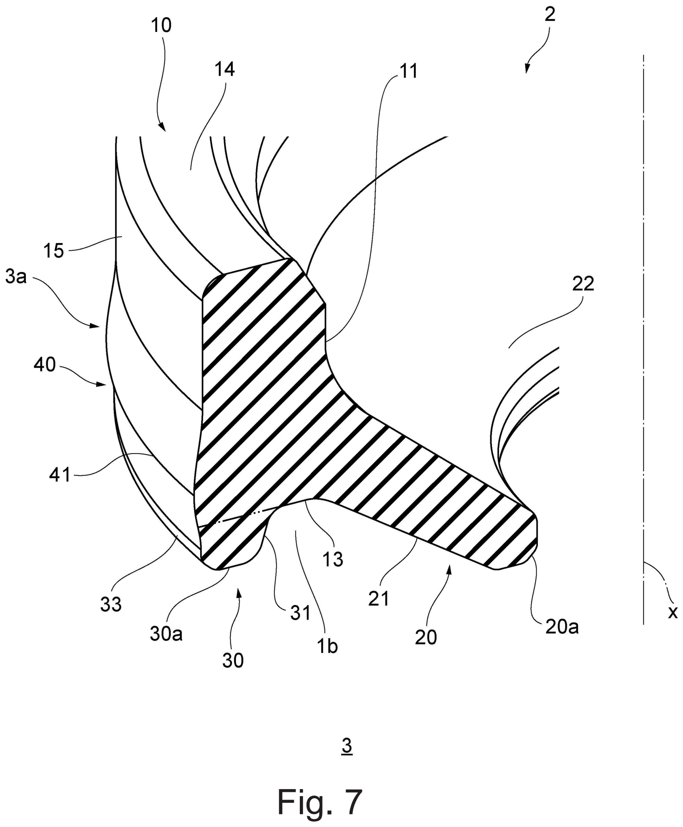

Next, a sealing device 3 according to a second embodiment of the present invention will be described. Figure 7 is a sectional perspective view illustrating a schematic configuration of the sealing device 3 according to the second embodiment of the present invention. It is to be noted that Figure 7 illustrates a part of the sealing device 3, and illustrates one side relative to the axis line x of the cross section of the sealing device 3.

As illustrated in Figure 7, the sealing device 3 according to the second embodiment is different from the above-mentioned sealing device 1 in including an outer peripheral surface 3a having a configuration different from the outer peripheral surface 1a of the sealing device 1 according to the first embodiment described above. Hereinafter, regarding the configuration of the sealing device 3, a configuration having an action that is the same as or similar to the above-mentioned sealing device 1 is denoted by the same reference symbol as the reference symbol of the above-mentioned sealing device 1 to omit the description thereof, and only a different configuration is described.

As illustrated in Figure 7, the outer peripheral surface 3a of the sealing device 3 is different from the outer peripheral surface 1a of the sealing device 1 described above. Specifically, an outer peripheral surface 15 of the fitting portion 10 of the sealing device 3 has a configuration different from the outer peripheral surface 12 of the sealing device 1 described above, and similarly an outer peripheral surface 33 of the first protruding portion 30 of the sealing device 3 has a configuration different from the outer peripheral surface 12 of the sealing device 1 described above.

Specifically, as illustrated in Figure 7, the elastic body portion 2 of the sealing device 3 includes a second protruding portion 40 that protrudes toward the outer periphery side and is annular around the axis line x, and the second protruding portion 40 is formed in the outer peripheral surface 3a of the sealing device 3. That is, in the sealing device 3, the outer peripheral surface 3a has the second protruding portion 40 formed thereon, which is an annular part protruding to the outer periphery side. The second protruding portion 40 extends, for example, along a circular ring having the axis line x as a center axis or a substantially center axis. Specifically, for example, a distal end 41 of the second protruding portion 40 extends on a circular ring or a substantially circular ring having the axis line x as a center axis or a substantially center axis. It is to be noted that the distal end 41 is an end of the second protruding portion 40 on the outer periphery side, and is a part of the second protruding portion 40 on the most outer periphery side. The distal end 41 is, for example, an annular line or an annular surface. The distal end 41 contacts the inner peripheral surface 112 of the through hole 111 in the usage state of the sealing device 3.

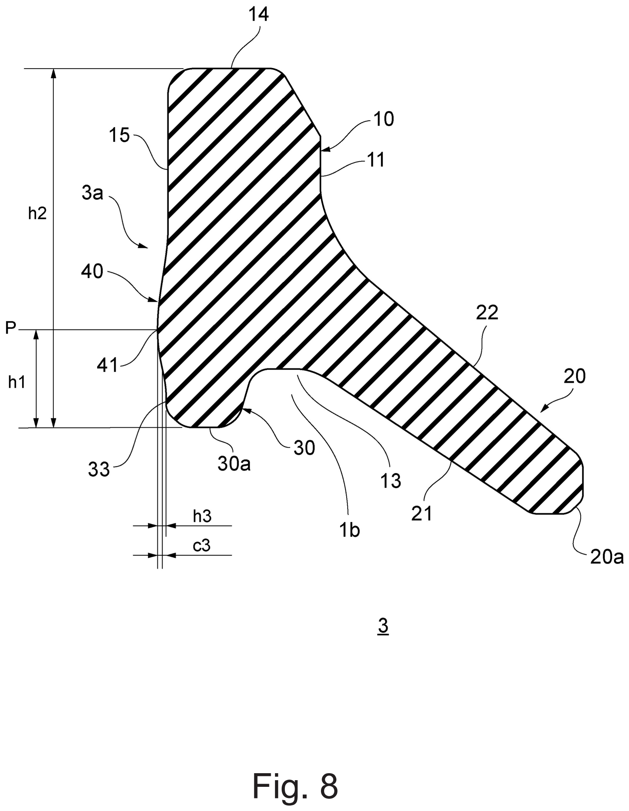

Figure 8 is a partially-enlarged sectional view illustrating one side relative to the axis line x of the cross section of the sealing device 3 illustrated in Figure 7 in an enlarged manner. As illustrated in Figure 8, the distal end 41 of the second protruding portion 40 is located at a predetermined position in the axis line x direction. For example, the distal end 41 of the second protruding portion 40 is provided to be positioned in a range from the distal end 30a of the first protruding portion 30 to a predetermined position in the axis line x direction. Specifically, for example, a position P in the axis line x direction of the distal end 41 of the second protruding portion 40 is located so that, in a cross section illustrated in Figure 8, an inner side height h1 is equal to or less than 1/3 of an outer side height h2 (h1≤h2×1/3). It is to be noted that, as illustrated in Figure 8, the inner side height h1 is a distance in the axis line x direction from the distal end 30a of the first protruding portion 30 to the distal end 41 of the second protruding portion 40. Further, the outer side height h2 is a width in the axis line x direction in the fitting portion 10 and the first protruding portion 30 of the elastic body portion 2, and is a distance in the axis line x direction between the distal end 30a of the first protruding portion 30 and the outer end 14 of the fitting portion 10.

Further, as illustrated in Figure 8, in section, the distal end 41 of the second protruding portion 40 is located at a position having a predetermined height h3 in the radial direction. It is to be noted that the height h3 of the distal end 41 of the second protruding portion 40 is a protruding amount of the second protruding portion 40 in the radial direction. The height h3 is, for example, a value in a range of 0.08 mm to 0.12 mm. Further, the position of the distal end 41 of the second protruding portion 40 in the radial direction is, for example, a position at which a crush allowance c3 of the second protruding portion 40 becomes 0.05 mm or more. It is to be noted that the crush allowance c3 of the second protruding portion 40 is an amount to be crushed in the radial direction when the second protruding portion 40 contacts the inner peripheral surface 112 of the through hole 111 in the usage state of the sealing device 3, and is a difference of the radius of the inner peripheral surface 112 of the through hole 111 from the radius of the distal end 41 of the second protruding portion 40 ("radius of distal end 41 of second protruding portion 40"-"radius of inner peripheral surface 112 of through hole 111").

In the usage state of the sealing device 3, the second protruding portion 40 contacts the inner peripheral surface 112 of the through hole 111 uniformly or substantially uniformly around the axis line x. Further, as described above, the position P of the distal end 41 of the second protruding portion 40 is located so that the inner side height h1 is equal to or less than 1/3 of the outer side height h2 (h1≤h2×1/3). Thus, even when the tube 120 is greatly eccentric to make the crush allowance c of the lip 20 non-uniform, and the outer peripheral surface 3a of the elastic body portion 2 is deformed to correspond to this non-uniform crush allowance c, in the second protruding portion 40, the uniform or substantially uniform contact to the inner peripheral surface 112 of the through hole 111 around the axis line x can be maintained. This makes it possible to prevent or suppress reduction in sealing performance of the sealing device 3 due to the eccentricity of the tube 120.

It is to be noted that, when the position P of the distal end 41 of the second protruding portion 40 is not located so that the inner side height h1 becomes larger than 1/3 of the outer side height h2 (h1>h2×1/3), the action of the second protruding portion 40 as described above, that is, the uniform or substantially uniform contact to the inner peripheral surface 112 of the through hole 111 around the axis line x may not be obtained. This is caused by an influence of deformation of the entire sealing device 3 as being caught to the inner periphery side due to the contact of the tube 120 to the lip 20 when the tube 120 is inserted in the sealing device 3.

As described above, the sealing device 3 according to the second embodiment of the present invention can more suppress reduction in sealing performance due to the eccentricity of the tube 120 that is the application target.

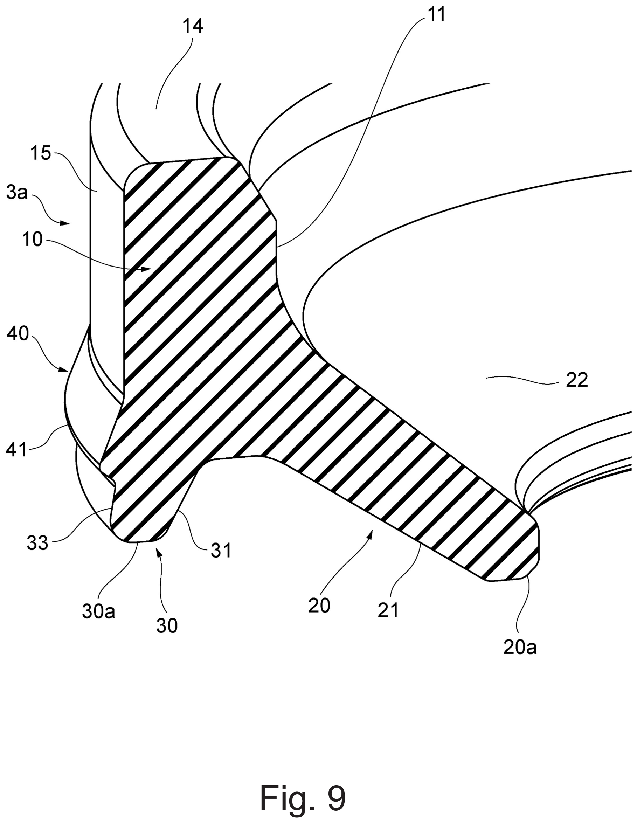

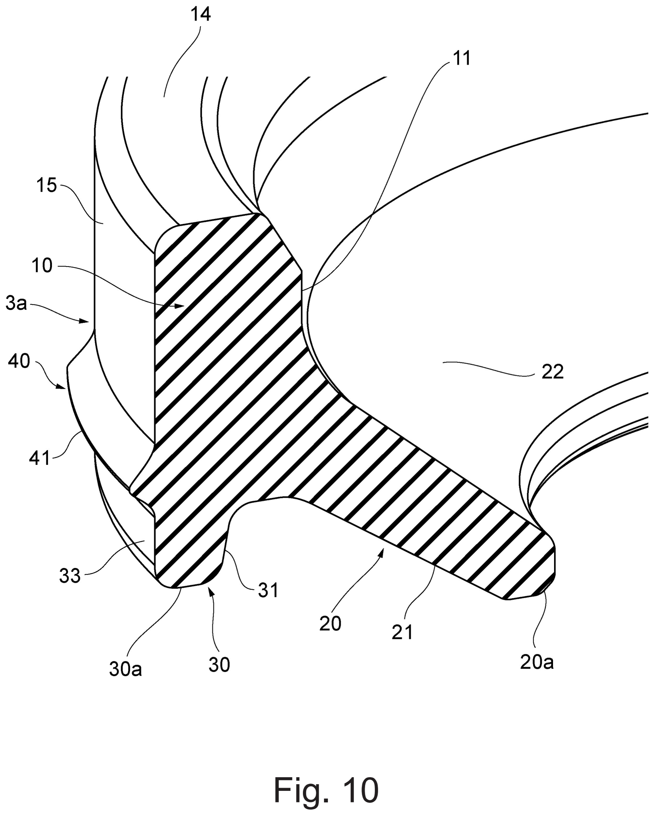

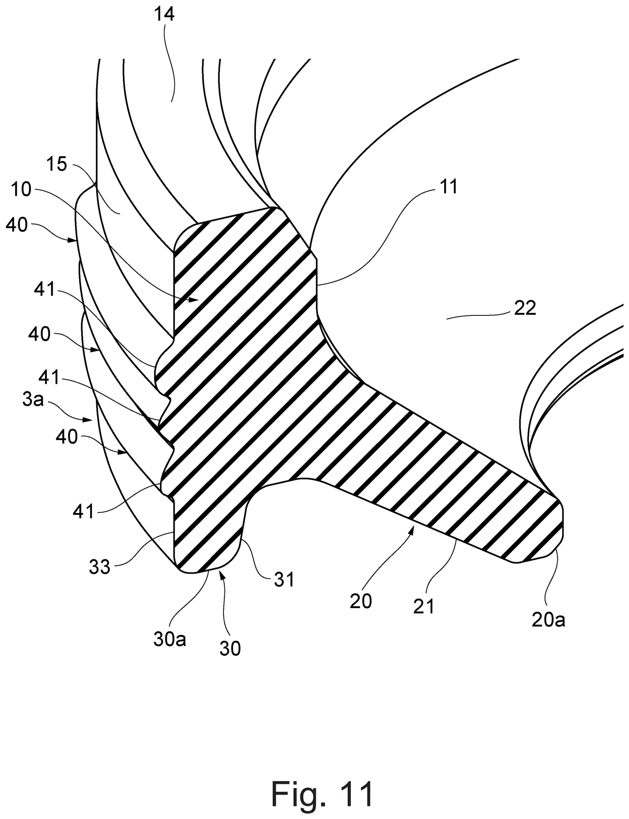

Next, a modification example of the sealing device 3 is described. Figures 9 to 11 are each a sectional perspective view illustrating a schematic configuration of an example of the modification example of the sealing device 3. As illustrated in Figure 9, the sealing device 3 may have a configuration in which the second protruding portion 40 is provided to the sealing device 1 according to the modification example illustrated in Figure 4. Further, as illustrated in Figure 9, the sectional shape of the second protruding portion 40 is not required to be symmetric in the axis line x direction. For example, the distal end 41 may be positioned on the inner side from the middle in the axis line x direction in the second protruding portion 40. Further, for example, the width of the second protruding portion 40 in the axis line x direction may be various widths. For example, as illustrated in Figure 10, the width of the second protruding portion 40 in the axis line x direction may be narrow. Further, as illustrated in Figure 11, the sealing device 3 may include a plurality of second protruding portions 40. In this case, the plurality of second protruding portions 40 are arranged in the axis line x direction. Further, in this case, all positions P of the plurality of second protruding portions 40 are not required to be located so that the inner side height h1 is equal to or less than 1/3 of the outer side height h2 (h1≤h2×1/3). It is only required that the position P of at least one second protruding portion 40 be located so that the inner side height h1 is equal to or less than 1/3 of the outer side height h2 (h1≤h2×1/3).

In the foregoing, the present invention has been described by means of the above-mentioned embodiments, but the technical scope of the present invention is not limited to the scope described in the above-mentioned embodiments. It is obvious to those skilled in the art that various modifications or improvements may be added to the above-mentioned embodiments. It is obvious from the description of the claims that modes to which such modifications or improvements are added may also be within the technical scope of the present invention.

The embodiments described above are merely for the convenience of understanding of the present invention and should not be considered as limiting the present invention. Further, the above-mentioned embodiments are not intended to limit a usage target to which the present invention is to be used and the present invention may include anything as the usage target. The components of the above-mentioned embodiments and the layout, materials, conditions, shapes, sizes, and the like thereof are not limited to those exemplified and may be changed as appropriate. For example, the present invention includes a difference resulting from application of a manufacturing tolerance or the like. Further, the components described in different embodiments may be partially replaced or combined without a technical inconsistency. Further, the configurations may be selectively combined as appropriate so that at least a part of the above-mentioned problems and effects is solved or achieved.

For example, a reinforcing ring may be attached to the fitting portion 10. The reinforcing ring is an annular member having a high rigidity made of metal or the like, and is a member for reinforcing the fitting portion 10.

### [Reference Signs List]

1, 3 sealing device, 1a, 3a outer peripheral surface, 1b recessed part, 2 elastic body portion, 10 fitting portion, 10a inner end portion, 11
inner peripheral surface, 12, 15 outer peripheral surface, 13 inner end, 4 outer end, 15 outer peripheral surface, 20 lip, 20a distal end, 21 inner surface, 22 outer surface, 22a distal end, 30
first protruding portion, 30a distal end, 31
inner peripheral surface, 32, 33 outer peripheral surface, 33 outer peripheral surface, 40 second protruding portion, 41 distal end, 100 fluid mechanism, 101 gap, 110 housing, 111 through hole, 112 inner peripheral surface, 120 tube, 121
outer peripheral surface, c, c3 crush allowance, c1 maximum crush allowance, c2 minimum crush allowance, d amount of eccentricity, d1 maximum amount of eccentricity, F reaction force, g width, g1
minimum width, h1, h2, h3 height, l1 length, t1, t2 thickness, x, x1 axis line

## Claims

1. A sealing device that tightly closes an annular gap between a hole formed in a first member and a second member inserted in the hole, the sealing device comprising:
an elastic body portion that is a part annular around an axis line and formed from an elastic body, wherein
the elastic body portion includes a fitting portion that is a part annular around the axis line, a lip that protrudes from the fitting portion to an inner periphery side and is annular around the axis line, and a first protruding portion annular around the axis line,
the lip protrudes from an end portion of the fitting portion on one side in the axis line direction, while being inclined to the one side,
a length of the lip in a protruding direction is set based on a minimum crush allowance when the second member is eccentric at maximum with respect to the hole, and
the first protruding portion protrudes from the end portion of the fitting portion toward the one side.

2. The sealing device according to claim 1, wherein
the length of the lip is set so that the minimum crush allowance is equal to or more than a predetermined minimum value.

3. The sealing device according to claim 2, wherein
the minimum value is based on an amount of eccentricity when the second member is eccentric at maximum.

4. The sealing device according to claim 3, wherein
the minimum value is 30% of the amount of eccentricity when the second member is eccentric at maximum.

5. The sealing device according to claim 3 or 4, wherein
the minimum value is a ratio of the amount of eccentricity when the second member is eccentric at maximum to a width of the annular gap in a radial direction.

6. The sealing device according to claim 1, wherein
the first protruding portion defines an annular recessed part recessed to another side in the axis line direction between the first protruding portion and the lip.

7. The sealing device according to claim 1 or 6, wherein
a width of the first protruding portion in a radial direction is equal to or less than a difference between a minimum value of a width of the annular gap in the radial direction when the second member is eccentric at maximum and a thickness of the lip.

8. The sealing device according to claim 1, wherein
the elastic body portion includes a second protruding portion that protrudes toward an outer periphery side and is annular around the axis line,
the second protruding portion is provided so that an end of the second protruding portion on the outer periphery side is located in a range from an end of the first protruding portion on the one side to a predetermined position in the axis line direction, and
the predetermined position is a position separated from the end of the first protruding portion in the axis line direction by 1/3 of an elastic body portion height that is a width in the axis line direction in the fitting portion and the first protruding portion of the elastic body portion.

9. The sealing device according to claim 8, wherein
the elastic body portion includes a plurality of the second protruding portions, and
the plurality of second protruding portions are arranged in the axis line direction.

10. The sealing device according to claim 8, wherein
the end of the second protruding portion is positioned on the outer periphery side of each of the fitting portion and the first protruding portion.
